# EUROPÄISCHE PATENTSCHRIFT

(11) **EP 0 757 652 B1**
(45) Veröffentlichungstag und Bekanntmachung des Hinweises auf die Patenterteilung: **21.01.1998**
(21) Anmeldenummer: 95919454.9
(22) Anmeldetag: 13.05.1995
(51) Int. Cl.: B65D 43/08, B65D 53/02, F16L 55/115

(54) **VERSCHLUSS FÜR EIN ROHRFÖRMIGES ELEMENT**
CLOSURE UNIT FOR A TUBULAR ARTICLE
ELEMENT DE FERMETURE POUR ARTICLE TUBULAIRE

(30) Priorität: 13.05.1994 DE 4416734
(43) Veröffentlichungstag der Anmeldung: 12.02.1997
(73) Patentinhaber: Vieregge, Uwe, D-63584 Gründau (DE)
(72) Erfinder: Vieregge, Uwe, D-63584 Gründau (DE)
(74) Vertreter: Stoffregen, Hans-Herbert, Dr. Dipl.-Phys.
(86) Internationale Anmeldenummer: EP9501820
(87) Internationale Veröffentlichungsnummer: WO9531381

(56) Entgegenhaltungen:
- WO-A-92/02753
- CH-A- 269 761
- FR-A- 1 140 681
- FR-A- 2 385 024
- GB-A- 865 772
- US-A- 4 586 734

## Beschreibung

Die Erfindung bezieht sich auf einen Verschluß für ein rohrförmiges Element, insbesondere zum Verschließen eines Rohrendes, umfassend ein topfförmiges Element wie Kappe bestehend aus Boden mit von diesem ausgehender umlaufender Seitenwandung, von der eine außenflächig an das zu verschließende Element anlegbare Dichtung ausgeht.

Mit einem entsprechenden Verschluß ist die Möglichkeit gegeben, ein offenes Rohrende dicht zu verschließen. Dazu ist es jedoch nach dem Stand der Technik erforderlich, insbesondere bei Rohren die unter innerem Überdruck stehen, den Verschluß mittels einer Schraubverbindung oder durch Schweißen an dem Rohrende zu befestigen oder mittels anderer Befestigungselemente wie Schraubschellen den Verschluß fest mit dem Rohrende zu verbinden.

Dadurch ergibt sich der Nachteil, daß zur Montage des Verschlusses stets ein Werkzeug benutzt werden muß.

Auch sind Verschlüsse bekannt, die lediglich durch Aufschieben auf das Rohrende montiert werden. Jedoch kann eine solche Möglichkeit nur dort Einsatz finden, wo das abzuschließende Rohr gegenüber der Umwelt keinen Überdruck aufweist.

Ein Verschluß für einen Glasbehälter ist der GB 865 772 zu entnehmen. Dabei weist ein topfförmiger Deckel einen umgebördelten Rand auf, in dem ein Dichtungselement festgelegt ist, welches sich an der Außenfläche des sich zu verschließenden Glaskörpers dichtend anlegen kann.

In der US 4,586,734 ist eine Verbindung zwischen zwei Rohren beschrieben. Der Verschluß weist eine von dem Außenrohr ausgehende und mit Fahnen versehene Sicherungsscheibe auf, die ihrerseits über eine Drehsicherung gesichert ist. Beabstandet zur Sicherungsscheibe verläuft eine das Außenrohr gegenüber dem Innenrohr abdichtende Dichtung.

Der vorliegenden Erfindung liegt das Problem zugrunde, einen Verschluß der eingangs genannten Art für ein unter Überdruck stehendes Rohr zur Verfügung zu stellen, wobei die Montage des Verschlusses ohne Werkzeug möglich sein soll, ohne daß die Gefahr besteht, daß der Verschluß unkontrolliert abrutschen kann.

Die Aufgabe wird erfindungsgemäß dadurch gelöst, daß der Verschluß zumindest zwei aufeinanderliegende und in dem Verschluß durch ein Spannelement gesicherte Federkegelscheiben aufweist, daß jede Federkegelscheibe mit ihrem äußeren (ersten) Rand innenseitig an der Seitenwandung des topfförmigen Elements festgelegt ist und ihr innerer (zweiter) Rand sich in Richtung des Bodens erstreckt, daß der innere Rand durch Aussparungen zueinander beabstandete Fahnen aufweist, die an dem zu verschließenden rohrförmigen Element anliegen, und daß eine Dichtung zwischen der zu dem Spannelement fernliegenden Federkegelscheibe und dem topfförmigen Element mit einem ersten Abschnitt, das an dem topfförmigen Element anliegt, und einem zweiten Abschnitt, das an der Federkegelscheibe anliegt, angeordnet ist.

Durch die erfindungsgemäße Anordnung der Federkegelscheibe wird erreicht, daß der Verschluß mit wenig Kraftaufwand und ohne Einsatz von Werkzeugen auf die Außenfläche des zu verschließenden Elementes aufgeschoben werden kann. Durch die kegel-stumpfförmige Geometrie wird einerseits das Aufschieben auf das zu verschließende Element erleichtert und andererseits ein Abgleiten des Verschlusses von der Außenfläche des zu verschließenden Elementes dadurch verhindert, daß die Federkegelscheiben mit ihren freien inneren Rändern wenigstens teilweise in die Außenfläche des zu verschließenden Elementes eingreifen, sich quasi festkrallen, da sich die Federkegelscheiben in Richtung des Kappenbodens erstrecken und somit die Ränder beim Versuch, die Kappe wieder abzuziehen, in die Außenwandung des zu verschließenden Elementes hineindrücken. Somit ist auch bei unter innerem Überdruck stehenden Rohren ein sicherer Verschluß gewährleistet.

Insbesondere ist vorgesehen, daß der jeweilige innere Rand der Federkegelscheiben durch Aussparungen und Fahnen gebildete Zähne aufweist, wobei die Fahnen eine etwa dreifache Breite der Aussparungen aufweisen. Durch die Aussparungen wird die Federwirkung der Federkegelscheiben verbessert. Auch können die Fahnen mit ihren äußeren Rändern besser in die Außenfläche des zu verschließenden Elementes eingreifen, womit eine sichere Verbindung zwischen Verschluß und zu verschließendem Element gewährleistet ist.

Vorteilhaft weist der Verschluß wenigstens zwei aufeinanderliegende und zueinander verschiebbare Federkegelscheiben derart auf, daß die Fahnen der ersten Federkegelscheibe die Aussparungen der zweiten Federkegelscheibe überdecken und umgekehrt. Durch diese Maßnahme wird sichergestellt, daß die Fahnen der ersten und zweiten Federkegelscheibe entlang des gesamten Umfanges des zu verschließenden Elementes im Eingriff stehen. Diese Anordnung ist besonders dan von Vorteil, wenn Rohre mit hohen innerem Überdruck zu verschließen sind.

Auch stützen sich die Federkegelscheiben gegeneinander ab, so daß auch bei geringer Materialstärke eines jeden Ringes eine hohe Stabilität gegeben ist.

Vorteilhafterweise können die Federkegelscheiben voneinander abweichende Innendurchmesser aufweisen.

Vorzugsweise ist in einer umlaufenden Innennut der umlaufenden Seitenwandung das Spannelement wie Sprengring angeordnet.

In einer bevorzugten Ausführungsform ist vorgesehen, daß die Dichtung mit einem ersten Oberflächeabschnitt an einer einer kegelstumpfförmigen Geometrie folgenden Oberfläche der umlaufenden Seitenwandung anliegt und mit einem zweiten Oberflächenabschnitt abschnittsweise an der in bezug auf das Spannelement fernliegenden Federkegelscheibe. Durch diese Ausführungsform wird eine besonders einfache Festlegung sowohl der Dichtung als auch des bzw. der Ringelemente mit nur einem Spannelement wie Sprengring ermöglicht. Der kegelstumpfförmige Oberflächenabschnitt der umlaufenden Seitenwandung dient dabei als Gegenlager für die Dichtung, wodurch diese gleichzeitig stabilisiert wird.

Um eine möglichst gute Abdichtung gegenüber der Außenfläche eines zu verschließenden Rohres zu ermöglichen, weist die Dichtung einen umlaufenden stegartigen Innenabschnitt wie Lippe auf, die mit einem dritten Oberflächenabschnitt an der Außenfläche des zu verschließenden Elementes anliegt und dieses gegenüber der Verschlußkappe abdichtet. Die flexible Lippe weist einen lichten Durchmesser auf, der kleiner als der lichte Durchmesser des zu verschließenden Elementes ist, so daß sich die Lippe mit ihrem dritten Oberflächenabschnitt dicht an die Außenfläche des zu verschließenden Elementes anschmiegen kann. Hierdurch wird eine sichere Abdichtung zur Verfügung gestellt.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus dem den Zeichnungen zu entnehmenden bevorzugten Ausführungsbeispiel.

Es zeigen:
- Fig. 1: einen Verschluß für ein rohrförmiges Element im Schnitt,
- Fig. 2: den Verschluß gemäß Fig. 1 in Unteransicht,
- Fig. 3: eine topfförmige Kappe des Verschlusses gemäß Fig. 1 im Schnitt,
- Fig. 4: eine Dichtung des Verschlusses gemäß Fig. 1 im Schnitt,
- Fig. 5: ein Ringelement des Verschlusses gemäß Fig. 1 im Schnitt und
- Fig. 6: den Verschluß gemäß Fig. 1 aufgeschoben auf ein zu verschließendes Rohr im Schnitt.

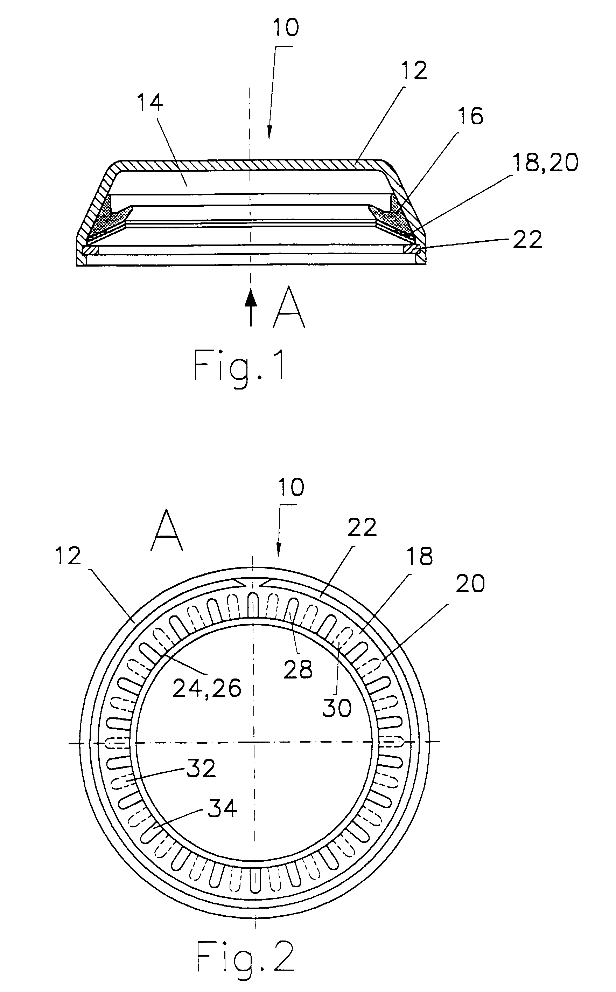

Der Fig. 1 ist ein Schnitt durch einen Verschluß (10) zum endseitigen Verschließen von insbesondere Rohren zu entnehmen. Der Verschluß (10) umfaßt ein topfförmiges Element (12) wie Kappe in dessen Innenraum (14) wenigstens eine Dichtung (16), zwei aufeinanderliegende Ringelemente (18), (20) in Form von Federkegelscheiben sowie ein die Dichtung (16) und die Federkegelscheiben (18), (20) festlegende Spannelement (22) wie Sprengring angeordnet sind. Selbstverständlich besteht auch die Möglichkeit, den Verschluß (10) mit nur einer Federkegelscheibe (18) bzw. (20) auszustatten, ohne daß die erfindungsgemäße Lehre verlassen wird.

Fig. 2 zeigt eine Unteransicht in Richtung des Pfeils A des Verschlusses gemäß Fig. 1. Um eine federnde Wirkung der inneren Ränder (24), (26) der Federkegelscheiben (18), (20) zu gewährleisten, weisen diese Aussparungen (28), (30) auf. Durch die Aussparungen (28), (30) werden Fahnen (32), (34) gebildet, die die inneren Ränder (24), (26) der Federkegelscheibe bilden.

Die Federkegelscheibe (20) ist gegenüber der Federkegelscheibe (18) versetzt derart angeordnet, daß die Aussparungen (28) der einen Federkegelscheibe (18) von den Fahnen (34) der anderen Federkegelscheibe (20) (gestrichelt dargestellt) überdeckt werden und umgekehrt.

Die Fahnen (32), (34) weisen in etwa die doppelte oder dreifache Breite von den Aussparungen (28), (30) auf.

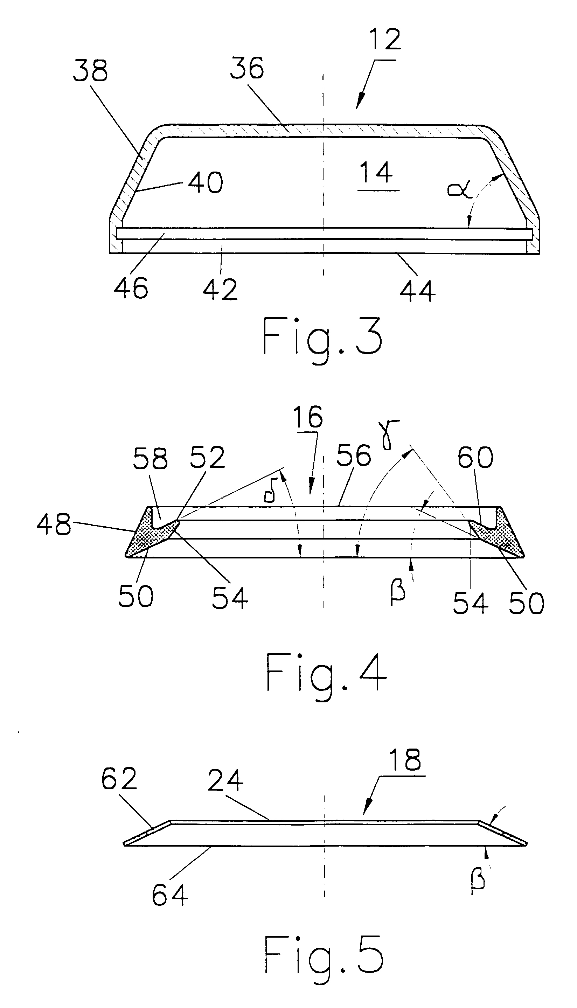

Fig. 3 zeigt das topfförmige Element (12) des Verschlusses (10) gemäß Fig. 1 im Schnitt. Das topfförmige Element (12) besteht im wesentlichen aus einer Bodenfläche (36), von der aus sich eine umlaufende Seitenwandung (38) zur Bildung der Topfform erstreckt. Die Seitenwandung (38) weist einen einer kegelstumpfförmigen Geometrie folgenden inneren Abschnitt (40) sowie einen eine Zylinderform bildenden äußeren Abschnitt (42) auf. Der die kegelstumpfförmige Oberfläche bildende innere Abschnitt (40) weist gegenüber einer vom Außenrand (44) aufgespannten Ebene einen Winkel α im Bereich von 60° < α < 70° vorzugsweise α ≈ 65° auf. In dem eine Zylinderform aufweisenden äußeren Abschnitt (42) des topfförmigen Elementes (12) ist eine umlaufende Innennut (46) zur Aufnahme des Sprengrings (22) eingebracht.

Die Dichtung (16) des Verschlusses (10) ist in Fig. 4 im Schnitt dargestellt. So ist die ringförmige Dichtung (16) im Schnitt keilförmig ausgebildet. Die Dichtung (16) wird einerseits von einem ersten an der Kappe (12) anlegbaren Abschnitt (48) und andererseits von einem sich ins Innere der Kappe (12) erstreckenden Abschnitt (50) begrenzt, die miteinander die Keilform ausbilden. Die Neigung der der Kappe zugewandten Außenfläche des ersten Abschnittes (48) bezüglich einer senkrecht zur Mittelachse verlaufenden Ebene entspricht im wesentlichen der Neigung α der Seitenwandung (40) des topfförmigen Elementes (12). Damit ist gewährleistet, daß die Dichtung im Innenraum (14) des topfförmigen Elementes (12) an dessen Innenwandung (40) dicht anliegt.

Von dem zweiten Abschnitt (50) geht ein flexibler stegförmiger umlaufender Abschnitt (52) wie Lippe aus, die einen dritten Abschnitt (54) der Dichtung (16) bildet. Zwischen dem ersten Abschnitt (48) und der Lippe (52) ist eine Ausnehmung (58) eingeformt, so daß die Flexibilität der Lippe (52) gewährleistet ist. Die Neigung der Außenfläche des zweiten Abschnitts (50) weist gegenüber der senkrecht zur Mittelachse verlaufenden Ebene eine Neigung im Bereich von 20° < β < 30°, vorzugsweise β ≈ 25° auf. Die Außenfläche des dritten Abschnitts (54) weist gegenüber der Ebene einen Winkel im Bereich 52° < γ < 60°, vorzugsweise γ ≈ 56° auf. Ein weiterer die Lippe (52) begrenzender Oberflächenabschnitt (60) weist bezüglich der Ebene einen Winkel im Bereich 25° < δ < 35° vorzugsweise δ ≈ 30° auf.

Fig. 5 zeigt die Federkegelscheibe (18), (20) gemäß Fig. 1 in einer Schnittdarstellung. Die Federkegelscheibe (18), (20) weist eine einer kegelförmigen Geometrie folgenden Oberfläche (62) auf, die gegenüber der Ebene einen Winkel im Bereich 20° < β < 30°, vorzugsweise β ≈ 25° einnimmt. Vorzugsweise sind die aufeinanderliegenden Oberflächen (62) und (50), von der Dichtung (16) und der Federkegelscheibe (18), gleichartig ausgebildet, so daß die Federkegelscheibe (18), (20) eben an der Oberfläche (50) der Dichtung (16) anliegen kann. Die Federkegelscheibe (18) weist einen inneren Rand (24) auf, der einen lichten Durchmesser aufweist, der kleiner ist als der lichte Durchmesser des zu verschließenden Elementes wie Rohres. Dadurch wird sichergestellt, daß sich die Fahnen oder Zähne (32), (34) der Federkegelscheibe (18), (20) in die Außenfläche des zu verschließenden Elementes festkrallen können.

Bei Verwendung von zwei Federkegelscheiben (18), (20) ist vorgesehen, daß die an der Dichtung (16) anliegende Federkegelscheibe (18) einen kleineren lichten Innendurchmesser (24) aufweist als die äußere Federkegelscheibe (20).

Die äußeren Ränder (26), (64) der Federkegelscheiben (18), (20) entsprechen einander und sind im wesentlichen von dem Innendurchmesser des Abschnitts (42) der Seitenwandung (38) des topfförmigen Elementes (12) bestimmt.

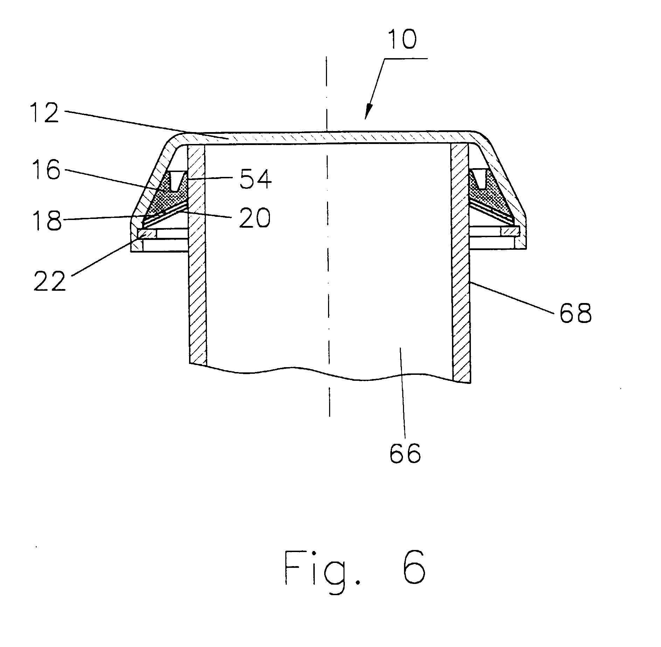

In Fig. 6 ist der auf einem zu verschließenden Element (66) wie Rohrende aufgeschobene Verschluß (10) im Schnitt dargestellt. Die Rohröffnung liegt dabei plan an dem Boden (36) des topfförmigen Elementes (12) an. Die Lippe (60) mit ihrer äußeren Fläche (54) liegt bei aufgeschobenem Verschluß (10) auf einer Außenfläche (68) des zu verschließenden Rohres (66) an. Die Fahnen (32), (34) der Federkegelscheiben (18), (20) greifen in die Außenfläche (68) des Rohres (66) derart ein, daß eine formschlüssige Verbindung zwischen Verschluß (10) und Rohr (66) entsteht.

Bei auf das Rohr (66) aufgeschobenem Verschluß (10) wird die Federkegelscheibe (18), (20) in Richtung der Dichtung (16) gedrückt, so daß einerseits eine hohe Spannung aufgebaut wird und andererseits eine Stabilisierung erfolgt.

## Patentansprüche

1. Verschluß (10) für ein rohrförmiges Element (66), insbesondere zum Verschließen eines Rohrendes, umfassend ein topfförmiges Element (12) wie Kappe bestehend aus Boden (36) mit von diesem ausgehender umlaufender Seitenwandung (38), von der eine außenflächig an das zu verschließende Element (66) anlegbare Dichtung (16) ausgeht,
**dadurch gekennzeichnet,**
daß der Verschluß (10) zumindest zwei aufeinanderliegende und in dem Verschluß durch ein Spannelement (22) gesicherte Federkegelscheiben (18, 20) aufweist, daß jede Federkegelscheibe (18, 20) mit ihrem äußeren (ersten) Rand (64) innenseitig an der Seitenwandung (38) des topfförmigen Elements (12) festgelegt ist und ihr innerer (zweiter) Rand (24) sich in Richtung des Bodens (36) erstreckt, daß der innere Rand durch Aussparungen (28, 30) zueinander beabstandete Fahnen (33, 34) aufweist, die an dem zu verschließenden rohrförmigen Element (66) anliegen, und daß eine Dichtung (16) zwischen der zu dem Spannelement fernliegenden Federkegelscheibe und dem topfförmigen Element mit einem ersten Abschnitt (48), das an dem topfförmigen Element anliegt, und einem zweiten Abschnitt 50, das an der Federkegelscheibe anliegt, angeordnet ist.

2. Verschluß nach Anspruch 1,
**dadurch gekennzeichnet,**
daß die Fahnen (32, 34) in etwa dreifach so breit wie die Aussparungen (28, 30) sind.

3. Verschluß nach Anspruch 1 oder 2,
**dadurch gekennzeichnet,**
daß die Fahnen (32) der ersten Federkegelscheibe (18) die Aussparungen (30) der zweiten Federkegelscheibe (20) überdecken und umgekehrt.

4. Verschluß nach einem oder mehreren der vorhergehenden Ansprüche
**dadurch gekennzeichnet,**
daß die Federkegelscheibe (18, 20) mit ihrer Umfangsfläche (62) zur Basisfläche einen Winkel β mit 20° < β < 30°, vorzugsweise β ≈ 25° aufweist.

5. Verschluß nach einem oder mehreren der vorhergehenden Ansprüche,
**dadurch gekennzeichnet,**
daß das Spannelement wie Sprengring (22) in einer umlaufenden Innennut (46) der Seitenwandung (42) des topfförmigen Elementes (12) festgelegt ist.

6. Verschluß nach einem oder mehreren der vorhergehenden Ansprüche,
**dadurch gekennzeichnet,**
daß die Dichtung (16) einen sich ins Innere (14) des topfförmigen Elementes (12) erstreckenden umlaufenden Steg (52) wie Lippe aufweist, die bei auf das zu verschließende Element (66) aufgebrachtem Verschluß (10) an dessen Außenfläche (68) dichtend anliegt.

7. Verschluß nach einem oder mehreren der vorhergehenden Ansprüche,
**dadurch gekennzeichnet,**
daß die Federkegelscheiben (18, 20) voneinander abweichende Innendurchmesser aufweisen.

## Claims

1. Closure (10) for a tubular element (66), in particular for closing a tube end, consisting of a pot-shaped element (12) such as a cap comprising a base (36) and a circumferential wall (38), which emanates from said base and from which emanates a seal (16) which may be applied against the outer surface of the element (66) to be closed,
characterized in
that the closure (10) comprises at least two conical spring washers (18, 20) lying one on top of the other and locked in the closure by means of a clamping element (22), that each conical spring washer (18, 20) is fixed by its outside (first) edge (64) to the inside of the wall (38) of the pot-shaped element (12) and its inside (second) edge (24) extends in the direction of the base (36), that the inside edge has lugs (33, 34), which are spaced apart from one another by recesses (28, 30) and rest against the tubular element (66) to be closed, and that a seal (16) is disposed between the conical spring washer remote from the clamping element and the pot-shaped element with a first portion (48) resting against the pot-shaped element and a second portion 50 resting against the conical spring washer.

2. Closure according to claim 1,
characterized in
that the lugs (32, 34) are approximately three times as wide as the recesses (28, 30).

3. Closure according to claim 1 or 2,
characterized in
that the lugs (32) of the first conical spring washer (18) overlap the recesses (30) of the second conical spring washer (20) and vice versa.

4. Closure according to one or more of the preceding claims,
characterized in
that the peripheral surface (62) and the base surface of the conical spring washer (18, 20) form an angle β of 20° < β < 30°, preferably β = 25°.

5. Closure according to one or more of the preceding claims,
characterized in
that the clamping element such as snap ring (22) is fixed in a circumferential internal groove (46) of the wall (42) of the pot-shaped element (12).

6. Closure according to one or more of the preceding claims,
characterized in
that the seal (16) comprises a circumferential web (52) such as a lip, which extends into the interior (14) of the pot-shaped element (12) and upon mounting of the closure (10) onto the element (66) to be closed is applied sealingly against the latter's outer surface (68).

7. Closure according to one or more of the preceding claims,
characterized in
that the conical spring washers (18, 20) have inside diameters which differ from one another.

## Revendications

1. Fermeture (10) pour un élément de forme tubulaire (66), en particulier pour fermer l'extrémité d'un tube, comportant un élément en forme de pot (12), tel qu'un bonnet, constitué d'un fond (36) se prolongeant en une paroi latérale périphérique (38) de laquelle part un joint d'étanchéité (16) pouvant se placer sur la surface externe de l'élément (66) à fermer, caractérisée en ce que la fermeture (10) présente au moins deux disques élastiques coniques (18, 20) superposés et fixés dans la fermeture par un élément de serrage (22), en ce que chaque disque élastique conique (18, 20) est immobilisé sur le côté interne de la paroi latérale (38) de l'élément en forme de pot (12) par son (premier) bord externe (64), et son (deuxième) bord interne (24) s'étend en direction du fond (36), en ce que le bord interne présente des talons (33, 34) écartés les uns des autres par des découpes (28, 30), lesquels talons viennent se placer contre l'élément (66) en forme de tube à fermer, et en ce qu'un joint d'étanchéité (16) est disposé entre le disque élastique éloigné de l'élément de serrage et l'élément en forme de pot, avec une première partie (48) qui vient se placer contre l'élément en forme de pot et une deuxième partie 50 qui vient se placer contre le disque élastique conique.

2. Fermeture selon la revendication 1, caractérisée en ce que les talons (32, 34) sont environ trois fois plus larges que les découpes (28, 30).

3. Fermeture selon les revendications 1 ou 2, caractérisée en ce que les talons (32) du premier disque élastique conique (18) recouvrent les découpes (30) du deuxième disque élastique conique (20) et inversement.

4. Fermeture selon l'une ou plusieurs des revendications précédentes, caractérisée en ce que la surface périphérique (62) des disques élastiques coniques (18, 20) forme avec la surface de base un angle β tel que 20° < β < 30°, et de préférence tel que β ≈ 25°.

5. Fermeture selon l'une ou plusieurs des revendications précédentes, caractérisée en ce que l'élément de serrage, par exemple une bague élastique (22), est fixé dans une rainure interne périphérique (46) de la paroi latérale (42) de l'élément en forme de pot (12).

6. Fermeture selon l'une ou plusieurs des revendications précédentes, caractérisée en ce que le joint d'étanchéité (16) présente une aile périphérique (52), par exemple une lèvre, qui s'étend à l'intérieur (14) de l'élément en forme de pot (12), et qui repose de manière étanche sur la surface externe (68) de la fermeture (10) installée sur l'élément (66), à fermer.

7. Fermeture selon l'une ou plusieurs des revendications précédentes, caractérisée en ce que les disques élastiques coniques (18, 20) présentent des diamètres internes qui diffèrent l'un de l'autre.
